# EUROPÄISCHE PATENTANMELDUNG

(11) **EP 4 545 816 A1**
(43) Veröffentlichungstag der Anmeldung: **30.04.2025**
(21) Anmeldenummer: 24205981.4
(22) Anmeldetag: 10.10.2024
(51) Int. Cl.: F16D 11/10, F16D 11/14

(54) **REIBKUPPLUNG EINES MEHRGANGGETRIEBES UND ELEKTROANTRIEB EINES FAHRZEUGS**

(30) Priorität: 23.10.2023 DE 102023129109
(71) Anmelder: HOERBIGER Antriebstechnik Holding GmbH, 86956 Schongau (DE)
(72) Erfinder: ÖZKAN, Sami, 86956 Schongau (DE); LORY, Konrad, 86956 Schongau (DE)
(74) Vertreter: Prinz & Partner mbB

(57) **Zusammenfassung**

Es wird eine Reibkupplung eines Mehrganggetriebes (10) vorgestellt, mit einer Betätigungsmuffe (26), die auf einer Welle (18) sitzt und linear entlang der Welle (18) verstellbar ist, einer ersten Reibkupplungseinheit (30), die in axialer Richtung auf der einen Seite der Betätigungsmuffe (26) angeordnet ist, einer zweiten Reibkupplungseinheit (34), die in axialer Richtung auf der der ersten Reibkupplungseinheit (30) entgegengesetzten Seite der Betätigungsmuffe (26) angeordnet ist, wobei die Betätigungsmuffe (26) in einem ersten Einkupplungszustand einen Reibschluss in der ersten Reibkupplungseinheit (30) erzeugt, und in einem zweiten Einkupplungszustand einen Reibschluss in der zweiten Reibkupplungseinheit (34) erzeugt. Es wird auch ein Elektroantrieb eines Fahrzeugs mit einem 2-Ganggetriebe und einem Elektromotor gezeigt, der über eine erfindungsgemäße Reibkupplung (22) gekoppelt ist.

## Beschreibung

Die Erfindung betrifft eine Reibkupplung eines Mehrganggetriebes und einen Elektroantrieb eines Fahrzeugs.

Bei elektrischen Antriebssträngen werden insbesondere zur Erhöhung der Effizienz vermehrt Mehrganggetriebe eingesetzt.

Dabei ist eine wichtige Anforderung ein lastunterbrechungsfreier Gangwechsel. Hierfür werden im bisherigen Stand der Technik oft Doppelkupplungen vorgesehen, die jeweils eine Kupplung aufweisen und je einen der Kupplung zugeordneten Aktuator zur Betätigung der Kupplung.

Diese Ausgestaltung ist jedoch insbesondere aufgrund der zwei Aktuatoren teuer in der Herstellung, komplex und weist zudem einen erhöhten Platzbedarf sowie ein hohes Gewicht auf.

Darüber hinaus muss bei einem Doppelkupplungsgetriebe eine präzise Steuerung der Aktuatoren erfolgen, sodass die Kupplungen genau aufeinander abgestimmt öffnen oder schließen.

Vor diesem Hintergrund ist es die Aufgabe der Erfindung, eine Kupplung bereitzustellen, die einen lastunterbrechungsfreien Gangwechsel ermöglicht, gleichzeitig kostengünstig hergestellt werden kann und einfach und zuverlässig gesteuert werden kann.

Die gestellte Aufgabe wird erfindungsgemäß durch eine Reibkupplung eines Mehrganggetriebes gelöst, mit einer Betätigungsmuffe, die auf einer Welle sitzt und linear entlang der Welle zwischen einem ersten Einkupplungszustand und einem zweiten Einkupplungszustand verstellbar ist, einer ersten Reibkupplungseinheit, die in axialer Richtung auf der einen Seite der Betätigungsmuffe angeordnet ist und die einen ersten Kupplungskörper umfasst, der drehbar auf der Welle gelagert ist, einer zweiten Reibkupplungseinheit, die in axialer Richtung auf der der ersten Reibkupplungseinheit entgegengesetzten Seite der Betätigungsmuffe angeordnet ist und die einen zweiten Kupplungskörper umfasst, der drehbar auf der Welle gelagert ist, einer ersten Federeinheit, die axial zwischen der Betätigungsmuffe und der ersten Reibkupplungseinheit angeordnet ist, einer zweiten Federeinheit, die axial zwischen der Betätigungsmuffe und der zweiten Reibkupplungseinheit angeordnet ist, wobei die Federeinheiten beide Reibkupplungseinheiten axial vorspannen, wenn die Betätigungsmuffe in einer Neutralstellung ist, wobei die Betätigungsmuffe im ersten Einkupplungszustand einen Reibschluss in der ersten Reibkupplungseinheit erzeugt und damit eine Drehverbindung zwischen der Welle und dem ersten Kupplungskörper vorliegt, und die Betätigungsmuffe im zweiten Einkupplungszustand einen Reibschluss in der zweiten Reibkupplungseinheit erzeugt und damit eine Drehverbindung zwischen der Welle und dem zweiten Kupplungskörper vorliegt.

Grundgedanke der Erfindung ist es, einen lastunterbrechungsfreien Gangwechsel zu ermöglichen, indem die Betätigungsmuffe von einem Einkupplungszustand über die Neutralstellung in den anderen Einkupplungszustand verschoben wird, sodass im fließenden Übergang ein Reibschluss in der einen Reibkupplungseinheit aufgelöst wird und unmittelbar darauf ein Reibschluss in der anderen Reibkupplungseinheit erzeugt wird.

Dies hat den Vorteil, dass nicht abgestimmt werden muss, wann eine der Reibkupplungseinheit geöffnet und die andere geschlossen wird, da dies automatisch aufgrund der Verschiebung der einen Betätigungsmuffe gesteuert wird.

Darüber hinaus kann durch den erfindungsgemäßen Aufbau eine besonders platzsparende Kupplung realisiert werden, da nur ein Aktuator für die Verstellung der einen Betätigungsmuffe benötigt wird.

Ein Aspekt sieht vor, dass der Betätigungsmuffe zumindest auf einer der Reibkupplungseinheiten zugewandten Seite ein Axiallager zugeordnet ist, an dem sich die jeweilige elastische Federeinheit in axialer Richtung abstützt.

So wird sichergestellt, dass wenn ein Drehzahlunterschied zwischen der Betätigungsmuffe und den Kupplungskörpern vorliegt, hierdurch keine oder weniger Reibung entsteht, die zu Verschleiß an der Betätigungsmuffe, den Federeinheiten oder den Reibkupplungen führen würde.

Das Axiallager kann ein Nagellager sein oder ein Gleitlager, das eine Gleitscheibe umfasst, insbesondere eine beschichtete Gleitscheibe.

Ist das Axiallager als Nagellager ausgebildet, so kann hierdurch ein besonders robustes und günstiges Axiallager bereitgestellt werden.

Ist das Axiallager ein Gleitlager, so ist der Platzbedarf des Axiallagers insbesondere in axialer Richtung besonders gering, sodass auch die Reibkupplung selbst kompakter ausgeführt werden kann.

Alternativ dazu kann durch eine entsprechende Beschichtung und/oder Härtung der Teile, zwischen denen eine Relativgeschwindigkeit vorliegen kann, auf zusätzliche Lager oder Gleitringe verzichtet werden. Bei dieser Alternative wird das Gleitlager oder Wälzlager somit durch die Beschichtung und/oder Härtung der sich kontaktierenden Teile selbst gebildet.

Folglich könnte z.B. eine Beschichtung und/oder Härtung der Betätigungsmuffe und/oder den Kupplungskörpern und/oder den Federeinheiten und/oder den Reibkupplungen erfolgen.

Weiter kann auf die erste und zweite Reibkupplungseinheit in einer Neutralstellung der Betätigungsmuffe jeweils eine zumindest annähernd gleiche Axialkraft wirken, die durch die jeweils zwischen der Betätigungsmuffe und der ersten oder zweiten Reibkupplungseinheit vorgespannte zugeordnete erste oder zweite Federeinheit hervorgerufen wird.

Dies stellt einerseits sicher, dass die Betätigungsmuffe ohne äußere Kräfte automatisch die Neutralstellung einnimmt, da die erste und zweite Federeinheit sich axial ebenso an der Betätigungsmuffe abstützen.

Andererseits kann die Axialkraft, die in der Neutralstellung durch die erste und zweite Federeinheit auf die erste oder zweite Reibkupplungseinheit wirkt, derart gewählt werden, dass bereits eine leichte Verschiebung der Betätigungsmuffe einen Reibschluss in der einen Reibkupplungseinheit verursacht, der zumindest die Übertragung eines festgelegten Mindestdrehmoments oder auch eine Übertragung des maximal möglichen Drehmoments (des Antriebs) erlaubt, während in der andere Reibkupplungseinheit kein Reibschluss mehr vorliegt.

Hierdurch kann sichergestellt werden, dass bei einer Verschiebung der Betätigungsmuffe von dem einen Einkupplungszustand zum anderen Einkupplungszustand ein Gangwechsel praktisch unmittelbar und zumindest annähend lastunterbrechungsfrei durchgeführt werden kann.

Weiter kann mit einer axialen Verschiebung der Betätigungsmuffe in den ersten Einkupplungszustand der Betrag der Axialkraft, die auf die zweite Reibkupplungseinheit wirkt, Null sein oder gegenüber der Neutralstellung reduziert werden. Alternativ oder zusätzlich dazu kann mit einer axialen Verschiebung der Betätigungsmuffe in den zweiten Einkupplungszustand der Betrag der Axialkraft, die auf die erste Reibkupplungseinheit wirkt, Null sein oder gegenüber der Neutralstellung reduziert werden.

Sinkt der Betrag der Axialkraft auf Null ab, so ist dies besonders vorteilhaft, da die Reibung innerhalb der nicht betätigten Reibkupplungseinheit durch Drehzahlunterschiede in der Reibkupplung auf ein Minimum reduziert werden können, sodass auch der Verschleiß reduziert werden kann.

Wird die jeweilige Axialkraft zumindest gegenüber der Neutralstellung reduziert, wenn die Betätigungsmuffe axial in einen Einkupplungszustand verschoben wird, so kann hierdurch zumindest eventuell eintretender Verschleiß aufgrund von Drehzahldifferenzen in der jeweiligen Reibkupplung auf ein gewisses Maß reduziert werden. Da die Neutralstellung aber zeitlich gesehen kaum auftritt, ist dieser Verschleiß vernachlässigbar.

Weiter kann der erste und/oder der zweite Kupplungskörper verdrehfest mit einem Zahnrad gekoppelt sein.

Ist die Reibkupplung geschlossen, so wird automatisch Drehmoment von der Welle über den Kupplungskörper an das mit dem Kupplungskörper gekoppelte Zahnrad übertragen. Auch die unmittelbare Kopplung von Kupplungskörper und Zahnrad ermöglicht eine platzsparende Konstruktion.

Die erste und/oder zweite Reibkupplungseinheit kann/können eine Lamellenkupplung umfassen.

Lamellenkupplungen eignen sich insbesondere für die Übertragung von hohen Drehmomenten, sie sind verschleißarm und weisen nur einen geringen Platzbedarf in axialer Richtung auf.

Die jeweilige Lamellenkupplung kann einen Außenlamellenträger aufweisen, der durch den jeweiligen Kupplungskörper gebildet wird oder mit diesem verdrehfest gekoppelt ist. Weiter können innerhalb des Außenlamellenträgers Außenlamellen vorgesehen sein, die verdrehfest mit dem Außenlamellenträger gekoppelt sind und Innenlamellen, die verdrehfest mit der Welle gekoppelt sind.

Entspricht der Außenlamellenträger dem Kupplungskörper, so übernimmt dieser gleich mehrere Aufgaben und es muss nicht noch ein zusätzlicher Kupplungskörper vorgesehen werden. Hierdurch können Kosten und Bauraum eingespart werden.

Weiter können die Außenlamellen der jeweiligen Lamellenkupplung beidseitig mit einem Reibbelag versehen sein und die Innenlamellen Stahllamellen sein.

Weiter ist es insbesondere möglich, dass das Lamellenpaket hin zur Betätigungsmuffe mit einer Innenlamelle endet.

Liegt innerhalb einer Reibkupplungseinheit kein Reibschluss vor, so ist es möglich, dass eine Drehzahldifferenz zwischen der Welle und dem Lamellenaußenträger vorliegt.

Dies hat auch zur Folge, dass eine Drehzahldifferenz zwischen den mit den Außenlamellenträger gekoppelten Außenlamellen und den mit der Welle gekoppelten Innenlamellen vorliegt.

Da die Betätigungsmuffe auf der Welle angeordnet ist und mit dieser beispielsweise verdrehfest verbunden sein kann, weist die Betätigungsmuffe und damit auch die elastische Federeinheit die Drehzahl der Welle auf.

Um nun an der Kontaktstelle zwischen der als Lamellenkupplung ausgebildeten Reibkupplungseinheit und der Betätigungsmuffe beziehungsweise dessen elastischer Federeinheit den Verschleiß zu minimieren, ist es von Vorteil, wenn das Lamellenpaket hin zur Betätigungsmuffe mit einer Innenlamelle endet, da diese dieselbe Drehzahl wie die Welle aufweist.

Darüber hinaus ist es vorteilhaft, wenn das Lamellenpaket mit einer Stahllamelle (hier die Innenlamelle) endet, da hierdurch Axialkräfte, die von der Betätigungsmuffe über eine Federeinheit auf eine Reibkupplungseinheit wirken, besonders gleichmäßig und flächig in die Lamellenkupplung eingeleitet werden können.

Dies hat eine gleichmäßige Flächenpressung zur Folge und stellt so einen zuverlässigen Reibschluss bei einer Betätigungsmuffe im Einkupplungszustand sicher. Zudem tritt eventuell eintretender Verschleiß an den Lamellen der Lamellenkupplung gleichmäßig auf.

Darüber hinaus kann die erste und/oder zweite Reibkupplungseinheit eine Konuskupplung umfassen.

Folglich ist es also möglich, dass eine Reibkupplungseinheit eine Lamellenkupplung oder eine Konuskupplung oder auch eine Reibkupplung und eine Konuskupplung aufweist.

Konuskupplungen haben den Vorteil, dass besonders geringe Betätigungs- und Haltekräfte aufgrund des Konuswinkels bereits einen Reibschluss ermöglichen. Im Vergleich zu einer Lamellenkupplung sind also geringere Axialkräfte notwendig.

Darüber hinaus ist es auch möglich, dass innerhalb einer Reibkupplung eine Reibkupplungseinheit eine Konuskupplung umfasst und die andere Reibkupplungseinheit eine Lamellenkupplung.

Hier könnte beispielsweise die Lamellenkupplung in der Reibkupplung eingesetzt werden, die höhere Drehmomente übertragen muss und die Konuskupplung in der Reibkupplung, die niedrige Drehmomente übertragen muss.

Alternativ ist dies auch umgekehrt möglich, wenn beispielsweise hohe Reibleistungen oder Reibenergien limitiert sind.

Werden innerhalb einer Reibkupplung nur identische Reibkupplungseinheiten eingesetzt, also zwei Lamellenkupplungen oder zwei Konuskupplungen, so vereinfacht dies die Herstellung und Montage.

Weiter können aufgrund der höheren Stückzahlen von gleichen Bauteilen die Herstellungskosten gesenkt werden.

Die jeweilige Konuskupplung kann einen Außenkonusreibringträger aufweisen, der verdrehfest mit der Welle gekoppelt ist und durch den jeweiligen Kupplungskörper gebildet ist.

Entspricht der Außenkonusreibringträger dem Kupplungskörper, so übernimmt dieser gleich mehrere Aufgaben und es muss nicht noch ein zusätzlicher Kupplungskörper vorgesehen werden. Hierdurch können Kosten und Bauraum eingespart werden.

Des Weiteren kann zumindest teilweise innerhalb des Außenkonusreibringträgers zumindest ein erstes Konusreibringelement angeordnet sein, das verdrehfest mit dem Außenkonusreibringträger gekoppelt ist und zumindest ein zweites Konusreibringelement, das verdrehfest mit der Welle gekoppelt sein kann, insbesondere wobei der Außenkonusreibringträger eine Innenkonusfläche hat, an der das zweite Konusreibringelement anliegen kann, welches zwischen dem Außenkonusreibringträger und dem ersten Konusreibringelement liegt.

Diese Anordnung ermöglicht eine platzsparende Ausgestaltung der Konuskupplung.

Darüber hinaus können mehrere Reibflächen bereitgestellt werden, sodass sich die Konuskupplung zur Übertragung größerer Momente eignet, als wenn nur ein Außenkonusreibringträger und ein einzelnes Konusreibringelement vorgesehen werden würden.

Des Weiteren kann die jeweilige Konuskupplung ein erstes Konusreibringelement umfassen und zwei Konusreibringelemente, zwischen denen das erste Konusreibringelement liegt und die jeweils eine das erste Konusreibringelement zugewandte Reibfläche aufweisen.

Diese Ausgestaltung erlaubt es, dass höhere Drehmomente durch die Konuskupplung übertragen werden können, als wenn diese wie oben beschrieben nur einen Außenkonusreibringträger und ein einzelnes Konusreibringelement aufweisen würde.

Zudem bildet so eines der zweiten Konusreibringelemente, welche verdrehfest mit der Welle gekoppelt sind, das axiale Ende der Konuskupplung hin zur elastischen Federeinheit.

Die jeweilige elastische Federeinheit kann sich an dem radial am weitesten innenliegenden Konusreibringelement abstützen.

Ist dieses wie zuvor beschrieben ein zweites Konusreibringelement, so weist dieses keinerlei Differenzdrehzahl zum elastischen Federelement auf, sodass keine Reibung und damit auch kein Verschleiß zwischen den Bauteilen vorliegt.

Die erste und/oder elastische Federeinheit kann zumindest einen Wellenring, eine Feder oder ein Paket aus diesen umfassen.

Sowohl Tellerfedern als auch Wellenfedern sind dabei besonders geeignet, da sie entlang des gesamten Umfangs gleichmäßig eine Axialkraft auf die Reibkupplungen aufbringen, wenn sie vorgespannt sind oder komprimiert werden.

Außerdem sind Tellerfedern und Wellenfedern besonders kostengünstige Teile.

Überdies kann die Betätigungsmuffe drehfest auf der Welle angeordnet sein.

Alternativ kann die Betätigungsmuffe drehbar auf der Welle gelagert sein.

Ist die Betätigungsmuffe drehfest auf der Welle angeordnet, so können die Reibkupplungseinheiten derart gestaltet sein, dass die Betätigungsmuffe stets den Teil der Reibkupplungseinheit über die Federeinheiten mit einer Axialkraft beaufschlagt, der ebenfalls drehfest mit der Welle gekoppelt ist, sodass keinerlei Relativdrehzahlen vorliegen.

Ist die Betätigungsmuffe drehbar auf der Welle gelagert, so kann die Betätigungsmuffe bei einer Betätigung einer der Reibkupplungen die Drehzahl der jeweiligen Reibkupplung annehmen, sodass es bei einem eventuell vorliegenden Drehzahlunterschied zu einem Drehzahlangleich kommt.

Die Betätigungsmuffe kann zur Betätigung mit einem elektromechanischen Aktuator oder mit einem hydraulischen Aktuator oder mit einem elektromagnetischen Aktuator oder mit einem Kugelrampenaktuator gekoppelt sein.

Ein elektromechanischer Aktuator erlaubt eine präzise Verstellung und Betätigung der Betätigungsmuffe.

Mit einem hydraulischen oder elektromagnetischen Aktuator kann eine besonders schnelle Verstellung der Betätigungsmuffe erfolgen.

Durch einen Kugelrampenaktuator kann ebenfalls besonders präzise eingestellt werden, wie weit die Betätigungsmuffe verstellt werden soll, wobei in diesem Fall die Betätigungsmuffe selbst mehrteilig ausgeführt sein kann.

Die eingangs genannte Aufgabe wird zudem gelöst durch einen Elektroantrieb eines Fahrzeugs mit einem 2-Ganggetriebe und einem Elektromotor, der über eine erfindungsgemäße Reibkupplung gekoppelt ist.

Die sich hieraus ergebenen Vorteile sind den obigen Absätzen zu entnehmen.

Die Erfindung wird nachfolgend anhand einer Ausführungsform beschrieben, die in den beigefügten Zeichnungen dargestellt ist. In diesen zeigen:
- Figur 1 in einer schematischen Darstellung eines erfindungsgemäßen Elektroantriebs für Fahrzeuge mit einem Mehrganggetriebe mit einer erfindungsgemäßen Reibkupplung;
- Figur 2 in einer Schnittansicht die erfindungsgemäße Reibkupplung mit Reibkupplungseinheiten gemäß einer ersten Alternative;
- Figur 3 in einer Schnittansicht die erfindungsgemäße Reibkupplung mit Reibkupplungseinheiten gemäß einer zweiten Alternative;
- Figur 4 in einer Schnittansicht die erfindungsgemäße Reibkupplung mit Reibkupplungseinheiten gemäß einer dritten Alternative;
- Figur 5 in einer Schnittansicht die erfindungsgemäße Reibkupplung mit einem Aktuator gemäß einer ersten Option; und
- Figur 6 in einer Schnittansicht die erfindungsgemäße Reibkupplung mit einem Aktuator gemäß einer zweiten Option.

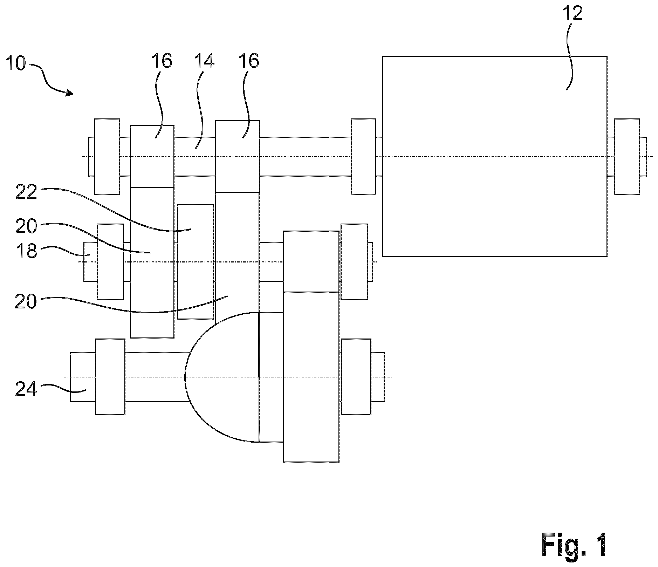

Figur 1 zeigt u.a. einen Elektroantrieb eines Fahrzeugs mit einem Mehrganggetriebe 10, das als Zweiganggetriebe ausgeführt ist, für einen Elektromotor 12 eines Fahrzeugs.

Das Mehrganggetriebe 10 weist eine mit dem Elektromotor 12 gekoppelte Eingangswelle 14 auf, die über Zahnräder 16 mit auf einer Welle 18 angeordneten Zahnrädern 20 gekoppelt ist.

Zudem ist an der Welle 18 eine Reibkupplung 22 vorgesehen, über die bestimmt werden kann, welche der aus den Zahnrädern 16 und 20 gebildeten Gangstufen eingelegt ist.

Die Welle 18 ist wiederum über weitere Zahnräder mit einer Abtriebswelle 24 verbunden.

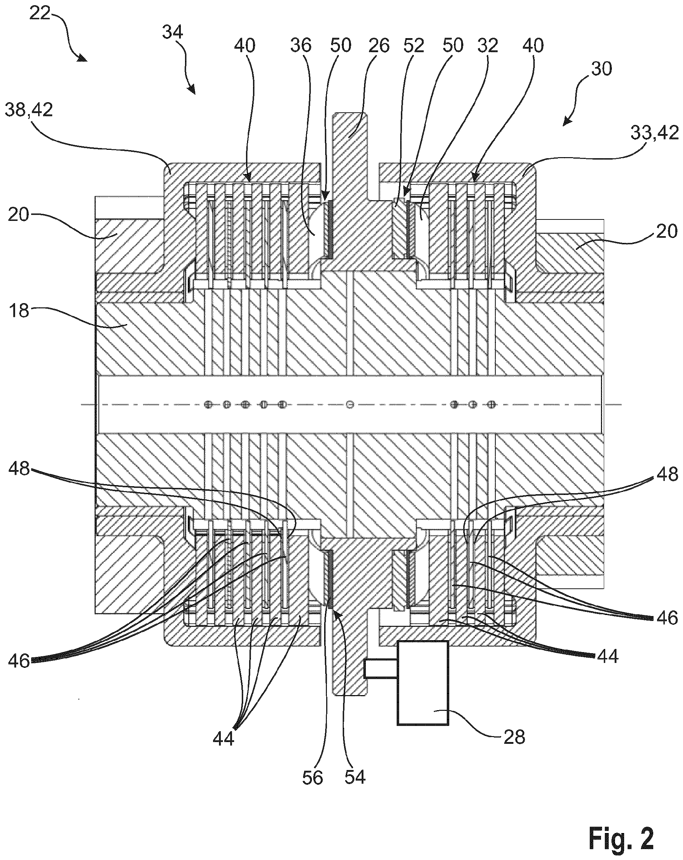

Im Nachfolgenden soll anhand von Figur 2 näher auf den Aufbau der Reibkupplung 22 eingegangen werden.

Die Reibkupplung 22 weist eine Betätigungsmuffe 26 auf, die auf der Welle 18 sitzt und linear entlang der Welle 18 verstellbar ist.

Die Betätigungsmuffe 26 kann dabei drehfest auf der Welle 10 angeordnet sein, wie es in Figur 2 der Fall ist.

Alternativ kann die Betätigungsmuffe 26 auch drehbar auf der Welle 18 gelagert sein.

Zur Verstellung der Betätigungsmuffe 26 ist ein Aktuator 28 vorgesehen, auf den im späteren Verlauf noch detaillierter eingegangen wird.

Darüber hinaus umfasst die Reibkupplung 22 eine erste Reibkupplungseinheit 30, die in axialer Richtung auf der einen Seite der Betätigungsmuffe 26 angeordnet ist, sowie eine erste Federeinheit 32, die axial zwischen der Betätigungsmuffe 26 und der ersten Reibkupplungseinheit 30 vorgesehen ist.

Die erste Reibkupplungseinheit 30 weist dabei einen ersten Kupplungskörper 33 auf, der drehbar auf der Welle 18 gelagert ist und verdrehfest mit einem der Zahnräder 20 gekoppelt ist.

Weiter umfasst die Reibkupplung 22 eine zweite Reibkupplungseinheit 34, die in axialer Richtung auf der der ersten Reibkupplungseinheit 30 entgegengesetzten Seite der Betätigungsmuffe 26 angeordnet ist, sowie eine zweite Federeinheit 36, die axial zwischen der Betätigungsmuffe 26 und der zweiten Reibkupplungseinheit 34 vorgesehen ist.

Die zweite Reibkupplungseinheit 34 weist einen zweiten Kupplungskörper 38 auf, der ebenfalls drehbar auf der Welle 18 gelagert ist und der mit dem anderen der beiden Zahnräder 20 verdrehfest gekoppelt ist.

Die erste und die zweite Federeinheit 32, 36 können dabei einen Wellenring oder eine Tellerfeder oder auch ein Paket aus Wellenring oder Tellerfedern umfassen.

Die in Figur 2 gezeigte Reibkupplung 22 entspricht einer ersten Alternative, bei der die erste Reibkupplungseinheit 30 und die zweite Reibkupplungseinheit 34 jeweils eine Lamellenkupplung 40 umfassen.

Dabei weist jede der Lamellenkupplungen 40 jeweils einen Außenlamellenträger 42 auf, der durch den jeweiligen Kupplungskörper 33, 38 gebildet wird.

Alternativ dazu ist es auch möglich, dass ein separater Außenlamellenträger vorgesehen ist, der jeweils mit den Kupplungskörpern 33, 38 gekoppelt ist.

Innerhalb der Außenlamellenträger 42 sind jeweils Außenlamellen 44 vorgesehen, die verdrehfest mit dem Außenlamellenträger 42 gekoppelt sind.

Weiter sind innerhalb jedes Außenlamellenträgers 42 auch Innenlamellen 46 vorgesehen, die verdrehfest mit der Welle 18 gekoppelt sind.

Die Innenlamellen 46 der jeweiligen Lamellenkupplung 40 weisen beidseitig einen Reibbelag 48 auf, während die Außenlamellen 44 in Form von Stahllamellen ausgeführt sind. Dies kann auch umgekehrt vorgesehen sein.

Zudem sind Axiallager 50 vorhanden. Diese können in Form eines Nadellagers 52 ausgeführt sein (siehe Figur 2, rechte Seite der Betätigungsmuffe 26) oder auch in Form eines Gleitlagers 54 mit einer Gleitscheibe 56 (siehe Figur 2, linke Seite der Betätigungsmuffe 26).

Alternativ dazu kann durch eine entsprechende Beschichtung und/oder Härtung der sich kontaktierendem Teile, zwischen denen eine Relativgeschwindigkeit vorliegen kann, auf zusätzliche Lager oder Gleitringe verzichtet werden. Das Nadellager 52 kann beispielsweise dadurch entfallen. Bei dieser Alternative wird das Gleitlager somit durch die Beschichtung und/oder Härtung der Teile selbst gebildet.

Dies erlaubt es, entsprechend der in Figur 2 gezeigten Anordnung, dass sich die Federeinheiten 32, 36 an dem jeweiligen Axiallager 50 abstützen und an der axial gegenüberliegenden Seite jeweils an einer Außenlamelle 44. Liegt nun ein Drehzahlunterschied zwischen der Betätigungsmuffe 26 und den Außenlamellenträgern 42 und damit auch den Außenlamellen 44 vor, so erlauben die Axiallager 50 eine Mitbewegung der Federeinheiten 32, 36.

Hierdurch kann Reibung und damit auch Verschleiß verhindert oder zumindest verringert werden.

Alternativ können auch die Innenlamellen 46 als Stahllamellen ausgeführt sein und die Außenlamellen 44 mit einem Reibbelag 48 versehen sein. Bei dieser Ausgestaltung endet das aus Außenlamellen 44 und Innenlamellen 46 gebildete Lamellenpaket hin zur Betätigungsmuffe 26 vorteilhafterweise mit einer Innenlamelle 46 (in Figur 2 nicht gezeigt).

So wird sichergestellt, dass die Federeinheiten 32, 36 bei einer drehfest mit der Welle 18 verbundenen Betätigungsmuffe 26 hin zur Lamellenkupplung keinerlei Relativdrehzahlen ausgesetzt sind, da die Innenlamellen 46, wie auch die Betätigungsmuffe 26, mit der Welle 18 gekoppelt sind. Ein Axiallager wäre folglich bei einer solchen Ausgestaltung nicht notwendig.

Nachfolgend soll anhand von Figur 2 auf die Verstellung der Reibkupplung 22 mittels der Betätigungsmuffe 26 eingegangen werden.

Die Betätigungsmuffe 26 befindet sich in Figur 2 in einer Neutralstellung.

In der Neutralstellung der Betätigungsmuffe 26 sind beide der Federeinheiten 32, 36 der Reibkupplungseinheiten 30, 34 axial vorgespannt, sodass auf die Lamellenkupplungen 40 eine jeweils Axialkraft wirkt.

In der Neutralstellung der Betätigungsmuffe 26 wirkt auf die erste und zweite Reibkupplungseinheit 30, 34 jeweils ein zumindest annähernd gleicher Betrag der Axialkraft durch die vorgespannten erste und zweite Federeinheit 32, 36.

Ausgehend von der Neutralstellung kann die Betätigungsmuffe 26 hin zur ersten Reibkupplungseinheit 30 in einen ersten Einkupplungszustand verschoben werden (nach rechts).

Dies erzeugt einen Reibschluss in der ersten Reibkupplungseinheit 30, sodass eine Drehverbindung zwischen der Welle 18 und dem ersten Kupplungskörper 33 und folglich auch dem Zahnrad 20 vorliegt.

Bei einer axialen Verschiebung der Betätigungsmuffe 26 ausgehend von der Neutralstellung hin zur ersten Reibkupplungseinheit 30 in den ersten Einkupplungszustand ist der Betrag der Axialkraft, die auf die zweite Reibkupplungseinheit 34 wirkt, Null oder zumindest gegenüber der Neutralstellung reduziert.

Dadurch liegt möglichst wenig Reibung innerhalb der zweiten Reibkupplungseinheit 34 vor, wenn die Betätigungsmuffe 26 im ersten Einkupplungszustand ist.

Weiter kann die Betätigungsmuffe 26 ausgehend von der Neutralstellung auch in einem zweiten Einkupplungszustand hin zur zweiten Reibkupplungseinheit 34 verschoben werden (nach links).

Dies hat zur Folge, dass ein Reibschluss innerhalb der zweiten Reibkupplungseinheit 34 erzeugt wird und damit eine Drehverbindung zwischen der Welle 18 und dem zweiten Kupplungskörper 38 und damit auch dem Zahnrad 20 vorliegt.

Auch hier ist mit der axialen Verschiebung der Betätigungsmuffe 26 in den zweiten Einkupplungszustand der Betrag der Axialkraft, die auf die erste Reinkupplungseinheit 30 wirkt, Null oder zumindest gegenüber einer Neutralstellung reduziert.

Wie bereits in Bezug auf die zweite Reibkupplungseinheit 34 erläutert, dient dies dazu, dass in der ersten Reibkupplungseinheit 30 bei einer sich im zweiten Einkupplungszustand befindlichen Betätigungsmuffe 26 möglichst wenig Reibung innerhalb der ersten Reibkupplungseinheit 30 erzeugt wird.

Weiter wird hierdurch erreicht, dass wenn die Betätigungsmuffe von einem Einkupplungszustand in den anderen verschoben wird, der Übergang "fließend" ist, da durch die Verschiebung der Betätigungsmuffe 26 ein Reibschluss innerhalb einer Reibkupplungseinheit aufgelöst wird und praktisch unmittelbar danach ein Reibschluss in der weiteren Reibkupplungseinheit hervorgerufen wird.

Dies erlaubt ein lastunterbrechungsfreies "Schalten" zwischen den Gängen.

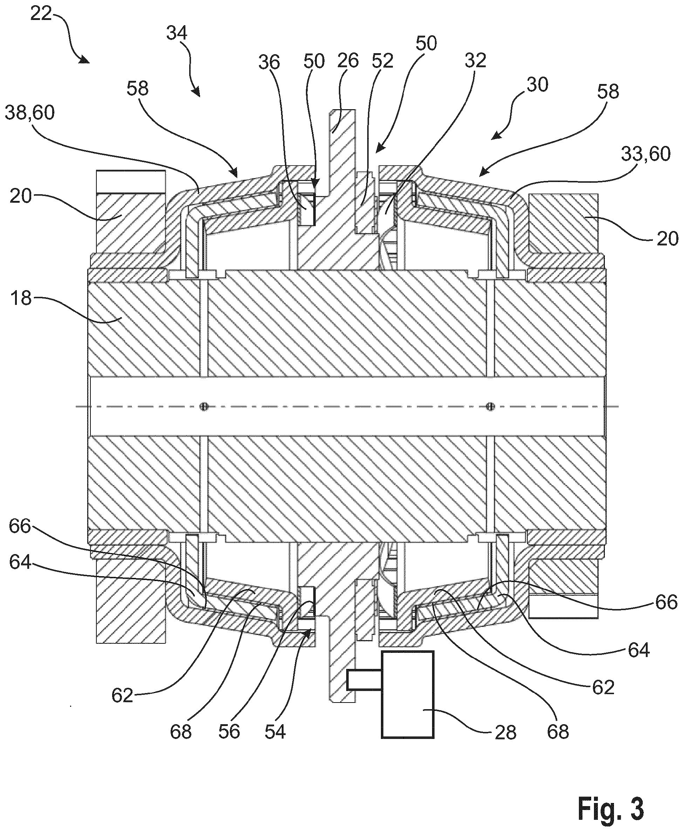

In Figur 3 ist eine Reibkupplung 22 mit Reibkupplungseinheiten 30, 34 gemäß einer zweiten Alternative gezeigt.

Im Unterschied zu der in Figur 2 gezeigten Reibkupplung 22 weist die erste und die zweite Reibkupplungseinheit 30, 34 jeweils eine Konuskupplung 58 auf.

Beide der Konuskupplungen 58 umfassen einen Außenkonusreibringträger 60, durch den gleichzeitig der jeweilige Kupplungskörper 33, 38 gebildet ist. Die Außenkonusreibringträger 60 bilden eine konische, radial nach innen weisende Reibfläche (Innenkonusfläche 66), die für die Drehmomentübertragung zur Verfügung steht.

Innerhalb des Außenkonusreibringträgers 60 der Konuskupplungen 58 ist ein erstes Konusreibringelement 62 angeordnet, das verdrehfest mit dem Außenkonusreibringträger 60 gekoppelt ist.

Zudem ist in jedem der Außenkonusreibringträger 60 ein zweites Konusreibringelement 62 vorgesehen, das verdrehfest mit der Welle 18 gekoppelt ist.

Das zweite Konusreibringelement 64 ist zwischen dem Außenkonusreibringträger 60 und dem ersten Konusreibringelement 62 angeordnet und kann durch Beaufschlagung der Konuskupplung 58 mit einer Axialkraft mit der Innenkonusfläche 66 des Außenkonusreibringträgers 60 sowie einer Außenkonusfläche 68 des ersten Konusreibringelements 62 in Kontakt gebracht werden.

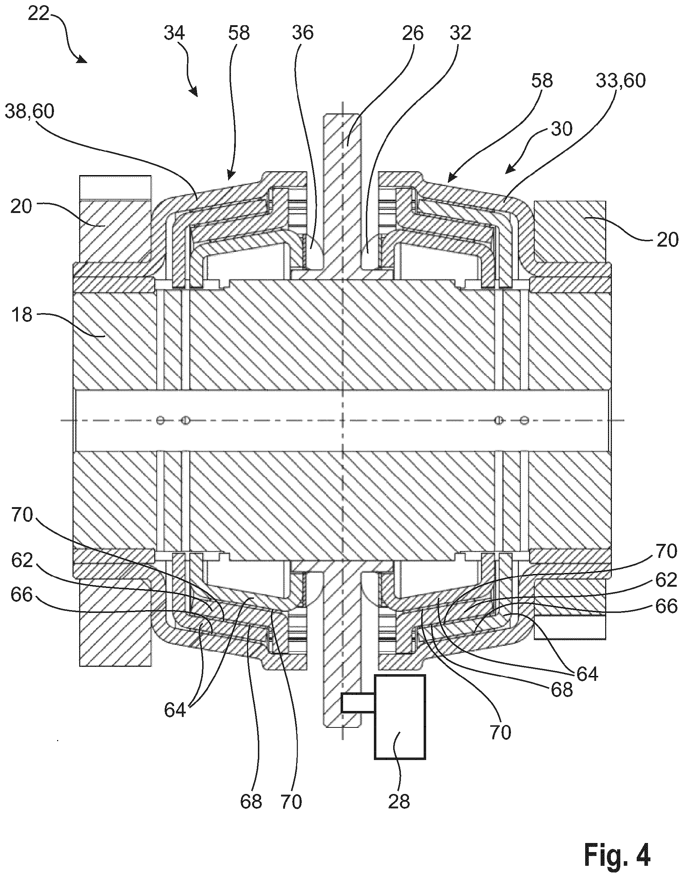

In Figur 4 ist eine weitere Reibkupplung 22 mit Reibkupplungseinheiten 30, 34 gemäß einer dritten Alternative gezeigt.

Im Unterschied zu der in Figur 3 gezeigten Reibkupplung 22 weisen die Reibkupplungseinheiten 30, 34 gemäß der dritten Alternative zwei zweite Konusreibringelemente 64 auf, die verdrehfest mit der Welle 18 gekoppelt sind. Zudem sind keine Axiallager vorgesehen.

Zwischen den zwei zweiten Konusreibringelementen 64 ist das erste Konusreibringelement 62 angeordnet, wobei die zweiten Konusreibringelemente 64 Reibflächen 70 aufweisen, die dem ersten Konusreibringelement 62 zugewandt sind. Außen dient die jeweilige Innenkonusfläche 66 als Abstützung und Reibfläche.

Zudem stützen sich die Federeinheiten 32, 36 ebenfalls an dem radial am weitesten innenliegenden Konusreibringelement ab. Dies ist jedoch im Unterschied zu der in Figur 3 gezeigten Reibkupplung 22 ein zweites Konusreibringelement 64.

Da die Betätigungsmuffe 26 und auch die zweiten Konusreibringelemente 64 verdrehfest mit der Welle 18 gekoppelt sind, wirken auf die Federeinheiten 32, 36 keinerlei Relativdrehzahlen, die zu Reibung und damit zu Verschleiß führen können.

Somit ist bei einer solchen Ausgestaltung kein Axiallager notwendig.

Hinsichtlich der Verstellung der Reibkupplung 22 über die Betätigungsmuffe 26 gelten in Bezug auf die Reibkupplungseinheiten 30, 34 gemäß einer zweiten und dritten Alternative die Ausführungen zur ersten Alternative.

Weiterhin ist es auch denkbar, dass eine der Reibkupplungseinheiten eine Lamellenkupplung und die andere eine Konuskupplung umfasst oder dass zumindest eine der Reibkupplungseinheiten sowohl eine Lamellenkupplung als auch eine Konuskupplung umfassen (in den Figuren nicht dargestellt).

Wie bereits eingangs angedeutet wurde, kann die Betätigungsmuffe 26 über den Aktuator 28 verstellt werden.

Hierfür sind verschiedene Arten von Aktuatoren zur Verstellung der Betätigungsmuffe 26 denkbar.

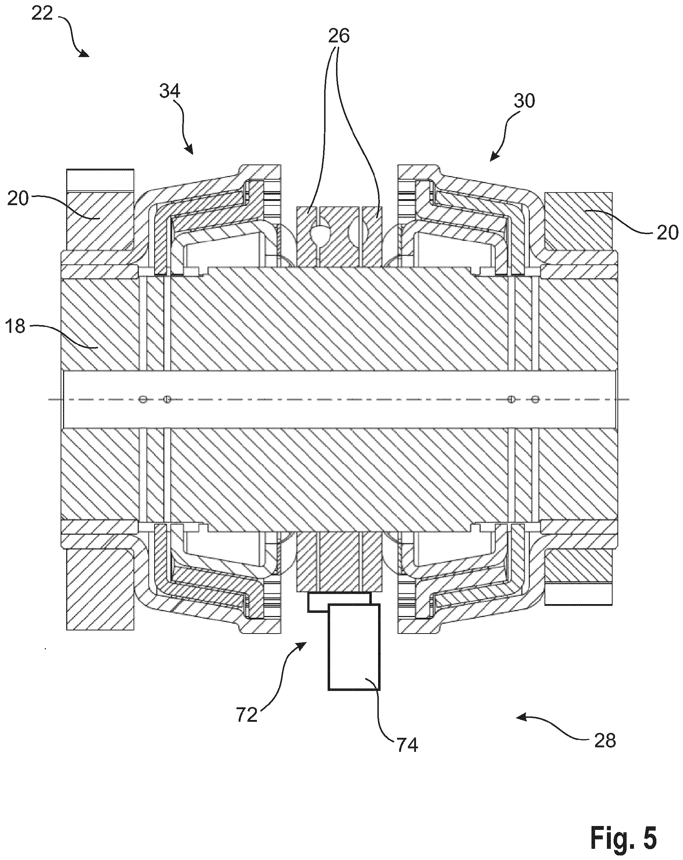

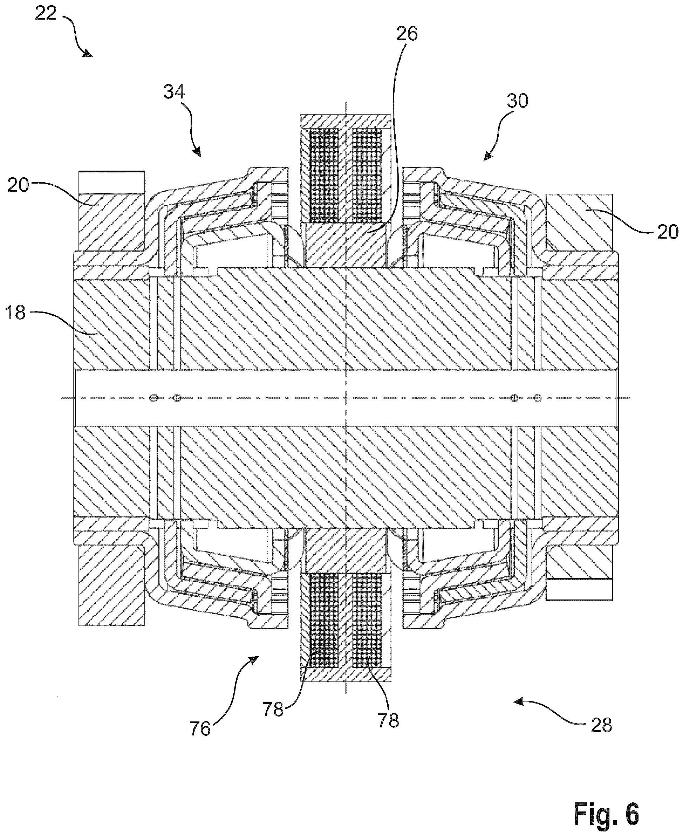

Zwei mögliche Aktuatoren sind beispielhaft in den Figuren 5 und 6 nur bei einer Reibkupplung 22 mit Reibkupplungseinheiten 30, 34 gemäß der dritten Alternative gezeigt, sie sind aber auch auf die anderen Ausführungsformen anwendbar.

Zur Verbesserung der Übersichtlichkeit wurde in den Figuren 5 und 6 nur die relevantesten Bauteile mit Bezugszeichen versehen.

Die Betätigungsmuffe 26 kann dabei wie in Figur 5 mit einem Kugelrampenaktuator 72 gekoppelt sein.

Bei dieser Option bildet die Betätigungsmuffe 26 einen Teil des Kugelrampenaktuators 72, der wiederum über einen Antrieb 74 verfügt, um die Betätigungsmuffe 26 zu verstellen.

Wie in Figur 6 gezeigt ist, kann die Betätigungsmuffe 26 auch mit einem elektromagnetischen Aktuator 76 gekoppelt sein.

Der elektromagnetische Aktuator 76 weist Spulen 78 auf, wobei die Betätigungsmuffe 26 als Spulenkern dient und durch Bestromen der Spulen 78 axial entlang der Welle 18 verstellt werden kann.

Darüber hinaus ist es auch denkbar, dass die Betätigungsmuffe 26 mit einem elektromechanischen Aktuator oder auch mit einem hydraulischen Aktuator gekoppelt ist, wobei dies in den Zeichnungen nicht dargestellt ist.

## Patentansprüche

1. Reibkupplung eines Mehrganggetriebes (10), mit einer Betätigungsmuffe (26), die auf einer Welle (18) sitzt und linear entlang der Welle (18) zwischen einem ersten Einkupplungszustand und einem zweiten Einkupplungszustand verstellbar ist,
einer ersten Reibkupplungseinheit (30), die in axialer Richtung auf der einen Seite der Betätigungsmuffe (26) angeordnet ist und die einen ersten Kupplungskörper (33) umfasst, der drehbar auf der Welle (18) gelagert ist,
einer zweiten Reibkupplungseinheit (34), die in axialer Richtung auf der der ersten Reibkupplungseinheit (30) entgegengesetzten Seite der Betätigungsmuffe (26) angeordnet ist und die einen zweiten Kupplungskörper (38) umfasst, der drehbar auf der Welle (18) gelagert ist,
einer ersten Federeinheit (32), die axial zwischen der Betätigungsmuffe (26) und der ersten Reibkupplungseinheit (30) angeordnet ist,
einer zweiten Federeinheit (36), die axial zwischen der Betätigungsmuffe (26) und der zweiten Reibkupplungseinheit (34) angeordnet ist,
wobei die Federeinheiten (32, 36) beide Reibkupplungseinheiten (30, 34) axial vorspannen, wenn die Betätigungsmuffe (26) in einer Neutralstellung ist,
wobei die Betätigungsmuffe (26) im ersten Einkupplungszustand einen Reibschluss in der ersten Reibkupplungseinheit (30) erzeugt und damit eine Drehverbindung zwischen der Welle (18) und dem ersten Kupplungskörper (33) vorliegt, und
die Betätigungsmuffe (26) im zweiten Einkupplungszustand einen Reibschluss in der zweiten Reibkupplungseinheit (34) erzeugt und damit eine Drehverbindung zwischen der Welle (18) und dem zweiten Kupplungskörper (38) vorliegt.

2. Reibkupplung nach Anspruch 1, **dadurch gekennzeichnet, dass** der Betätigungsmuffe (26) zumindest auf einer der Reibkupplungseinheiten (30, 34) zugewandten Seite ein Axiallager (50) zugeordnet ist, an dem sich die jeweilige Federeinheit (32, 36) in axialer Richtung abstützt.

3. Reibkupplung nach Anspruch 2, **dadurch gekennzeichnet, dass** das Axiallager (50) ein Nadellager (52) ist oder ein Gleitlager (54), das eine Gleitscheibe (56) umfasst, insbesondere eine beschichtete Gleitscheibe oder ein durch eine Beschichtung und/oder Härtung gebildetes Gleitlager.

4. Reibkupplung nach einem der vorherigen Ansprüche, **dadurch gekennzeichnet, dass** auf die erste und zweite Reibkupplungseinheit (30, 34) in einer Neutralstellung der Betätigungsmuffe (26) jeweils eine zumindest annähend gleiche Axialkraft wirkt, die durch die jeweils zwischen der Betätigungsmuffe (26) und der ersten oder zweiten Reibkupplungseinheit (30, 34) vorgespannte zugeordnete erste oder zweite Federeinheit (32, 36) hervorgerufen wird.

5. Reibkupplung nach einem der vorherigen Ansprüche, **dadurch gekennzeichnet, dass** mit einer axialen Verschiebung der Betätigungsmuffe (26) in den ersten Einkupplungszustand der Betrag der Axialkraft, die auf die zweite Reibkupplungseinheit (34) wirkt, Null ist oder gegenüber der Neutralstellung reduziert wird, und/oder dass mit einer axialen Verschiebung der Betätigungsmuffe (26) in den zweiten Einkupplungszustand der Betrag der Axialkraft, die auf die erste Reibkupplungseinheit (30) wirkt, Null ist oder gegenüber der Neutralstellung reduziert wird.

6. Reibkupplung nach einem der vorherigen Ansprüche, **dadurch gekennzeichnet, dass** der erste und/oder der zweite Kupplungskörper (33, 38) drehfest mit einem Zahnrad (20) gekoppelt ist/sind.

7. Reibkupplung nach einem der vorherigen Ansprüche, **dadurch gekennzeichnet, dass** die erste und/oder zweite Reibkupplungseinheit (30, 34) eine Lamellenkupplung (40) umfasst/umfassen.

8. Reibkupplung nach Anspruch 7, **dadurch gekennzeichnet, dass** die jeweilige Lamellenkupplung (40) einen Außenlamellenträger (42) aufweist, der durch den jeweiligen Kupplungskörper (33, 38) gebildet oder mit ihm drehfest gekoppelt ist, und dass innerhalb des Außenlamellenträgers (42) Außenlamellen (44) vorgesehen sind, die verdrehfest mit dem Außenlamellenträger (42) gekoppelt sind, und Innenlamellen (46), die verdrehfest mit der Welle (18) gekoppelt sind.

9. Reibkupplung nach Anspruch 8, **dadurch gekennzeichnet, dass** die Außenlamellen (44) der jeweiligen Lamellenkupplung (40) beidseitig mit einem Reibbelag (48) versehen sind und die Innenlamellen (46) Stahllamellen sind, und insbesondere dass das Lamellenpaket hin zur Betätigungsmuffe mit einer Innenlamelle endet.

10. Reibkupplung nach einem der vorherigen Ansprüche, **dadurch gekennzeichnet, dass** die erste und/oder zweite Reibkupplungseinheit (30, 34) eine Konuskupplung (58) umfasst/umfassen.

11. Reibkupplung nach Anspruch 10, **dadurch gekennzeichnet, dass** die jeweilige Konuskupplung (58) einen Außenkonusreibringträger (60) aufweist, der verdrehfest mit der Welle (18) gekoppelt ist und durch den jeweiligen Kupplungskörper (33, 38) gebildet ist.

12. Reibkupplung nach Anspruch 11, **dadurch gekennzeichnet, dass** zumindest teilweise innerhalb des Außenkonusreibringträgers (60) zumindest ein erstes Konusreibringelement (62) angeordnet ist, das verdrehfest mit dem Außenkonusreibringträger (60) gekoppelt ist, und zumindest ein zweites Konusreibringelement (64), das verdrehfest mit der Welle (18) gekoppelt ist, insbesondere wobei der Außenkonusreibringträger (60) eine Innenkonusfläche (66) hat, an der das zweite Konusreibringelement (64) anliegen kann, welches zwischen dem Außenkonusreibringträger (60) und dem ersten Konusreibringelement (62) liegt.

13. Reibkupplung nach Anspruch 12, **dadurch gekennzeichnet, dass** die jeweilige Konuskupplung (58) ein erstes Konusreibringelement (62) umfasst und zwei zweite Konusreibringelemente (64), zwischen denen das erste Konusreibringelement (62) liegt und die jeweils eine dem ersten Konusreibringelement (62) zugewandte Reibfläche (70) aufweisen.

14. Reibkupplung nach einem der Ansprüche 12 und 13, **dadurch gekennzeichnet, dass** sich die jeweilige elastische Federeinheit (32, 36) an dem radial am weitesten innen liegenden Konusreibringelement (62, 64) abstützt.

15. Elektroantrieb eines Fahrzeugs mit einem 2-Ganggetriebe und einem Elektromotor (12), der über eine Reibkupplung (22) nach einem der vorherigen Ansprüche gekoppelt ist.
